# EUROPEAN PATENT APPLICATION

(11) **EP 2 048 521 A2**
(43) Date of publication of application: **15.04.2009**
(21) Application number: 08166071.4
(22) Date of filing: 08.10.2008
(51) Int. Cl.: G01V 1/38

(54) **Controlling a seismic survey to reduce the effects of vibration noise**

(30) Priority: 08.10.2007 US 978275 P; 08.07.2008 US 169479
(71) Applicant: Geco Technology B.V., 2586 BJ S'Gravenhage (NL)
(72) Inventor: Goujon, Nicolas, 0478, Oslo (NO); Robertsson, Johan Olof Anders, Cambridge, Cambridgeshire CB3 9NJ (GB); Teigen, Oeyvind, 0253, Oslo (NO); Ozdemir, Ahmet Kemal, 1384, Asker (NO)
(74) Representative: Suckling, Andrew Michael

(57) **Abstract**

A technique includes towing a particle motion sensor (58) in connection with a seismic survey and controlling the survey to cause a notch in a frequency response of the particle motion sensor to substantially coincide with a frequency band at which aliased vibration noise appears in a seismic signal acquisition space of the particle motion sensor.

## Description

### BACKGROUND

The invention generally relates to controlling a seismic survey to reduce the effects of vibration noise.

Seismic exploration involves surveying subterranean geological formations for hydrocarbon deposits. A survey typically involves deploying seismic source(s) and seismic sensors at predetermined locations. The sources generate seismic waves, which propagate into the geological formations creating pressure changes and vibrations along their way. Changes in elastic properties of the geological formation scatter the seismic waves, changing their direction of propagation and other properties. Part of the energy emitted by the sources reaches the seismic sensors. Some seismic sensors are sensitive to pressure changes (hydrophones), others to particle motion (e.g., geophones), and industrial surveys may deploy only one type of sensors or both. In response to the detected seismic events, the sensors generate electrical signals to produce seismic data. Analysis of the seismic data can then indicate the presence or absence of probable locations of hydrocarbon deposits.

A particular marine survey may involve towing a pressure and particle motion sensors on one or more streamers behind a surface vessel. The particular motion sensors typically are sensitive to vibration noise. In particular, it is possible that the vibration noise may be aliased into the particle motion measurement such that the aliased vibration noise is difficult if not impossible to remove from the measurement.

Some surveys are known as "marine" surveys because they are conducted in marine environments. However, "marine" surveys may be conducted not only in saltwater environments, but also in fresh and brackish waters. In one type of marine survey, called a "towed-array" survey, an array of seismic sensor-containing streamers and sources is towed behind a survey vessel.

### SUMMARY

In an embodiment of the invention, a technique includes towing a particle motion sensor in connection with a seismic survey and controlling the survey to cause a notch in a frequency response of the particle motion sensor to substantially coincide with a frequency band at which aliased vibration noise appears in a seismic signal acquisition space of the particle motion sensor.

In another embodiment of the invention, a technique includes obtaining a first set of seismic data acquired by a particle motion sensor towed in connection with a seismic survey. The particle motion sensor has a frequency response that includes a notch, which substantially coincides with a frequency band at which aliased vibration noise appears in a seismic signal acquisition space of the particle motion sensor. The technique includes obtaining pressure data acquired by a pressure sensor while in tow in connection with the seismic survey and processing the first and second sets of seismic data.

In another embodiment of the invention, a system includes an interface to receive a first set of seismic data acquired by a particle motion sensor while in tow in connection with a seismic survey and a second set of seismic data acquired by a pressure sensor while in tow in connection with the seismic survey. The first set of seismic data is associated with a frequency response and includes a notch that substantially coincides with a frequency band at which aliased vibration noise appears in a seismic signal acquisition space of the particle motion sensor. The system also includes a processor to process the first and second sets of seismic data.

In yet another embodiment of the invention, an article includes a computer accessible storage medium that stores instructions that when executed by a processor-based system cause the processor-based system to receive a first set of seismic data that is acquired by a particle motion sensor that is towed in connection with a seismic survey. The particle motion sensor has a frequency response that includes a notch that substantially coincides with a frequency band at which aliased vibration noise appears in a seismic signal acquisition space of the particle motion sensor. The processor receives pressure data acquired by a pressure sensor while in tow in connection with the seismic survey and processes the first and second sets of seismic data.

Advantages and other features of the invention will become apparent from the following drawing, description and claims.

### BRIEF DESCRIPTION OF THE DRAWING

Fig. 1 is a schematic diagram of a marine seismic data acquisition system according to an embodiment of the invention.

Fig. 2 is an illustration in frequency-wavenumber space of vibration noise at a multi-component sensor location.

Fig. 3 is an illustration in frequency-wavenumber space of vibration noise in addition to seismic signal content at a multi-component sensor location.

Fig. 4 is an expanded illustration in frequency-wavenumber space of the vibration noise and signal content near wavenumber zero.

Fig. 5 is an illustration of amplitudes of particle motion and pressure signals versus frequency at a multi-component sensor location.

Figs. 6, 8, 9 and 10 are flow diagrams depicting techniques to conduct seismic surveys according to embodiments of the invention.

Fig. 7 is a flow diagram depicting a technique to process seismic data according to an embodiment of the invention.

Fig. 11 is a seismic data processing system according to an embodiment of the invention.

### DETAILED DESCRIPTION

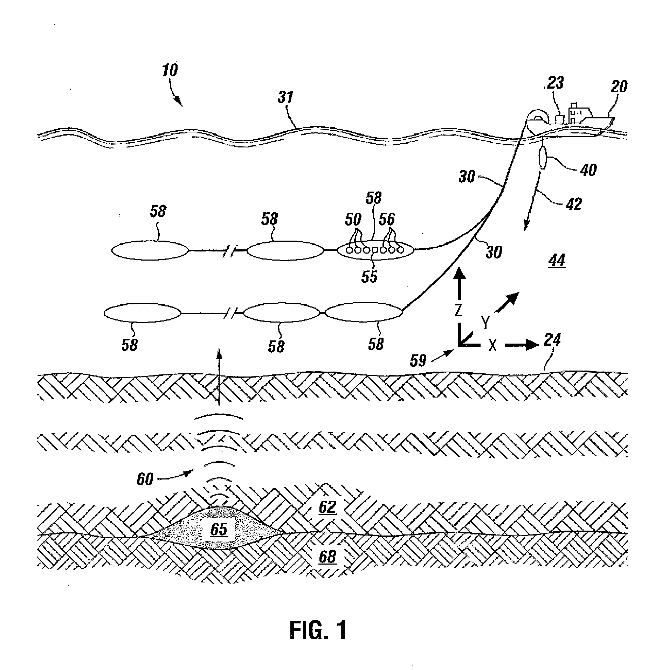

Fig. 1 depicts an embodiment 10 of a marine seismic data acquisition system in accordance with some embodiments of the invention. In the system 10, a survey vessel 20 tows one or more seismic streamers 30 (two exemplary streamers 30 being depicted in Fig. 1) behind the vessel 20. The seismic streamers 30 may be several thousand meters long and may contain various support cables (not shown), as well as wiring and/or circuitry (not shown) that may be used to support communication along the streamers 30.

Each seismic streamer 30 contains seismic sensors, which record seismic signals. In accordance with some embodiments of the invention, the seismic sensors are multi-component seismic sensors 58, each of which is capable of detecting a pressure wavefield and at least one component of a particle motion that is associated with acoustic signals that are proximate to the multi-component seismic sensor 58. Examples of particle motions include one or more components of a particle displacement, one or more components (inline (x), crossline (y) and vertical (z) components (see axes 59, for example)) of a particle velocity and one or more components of a particle acceleration.

Depending on the particular embodiment of the invention, the multi-component seismic sensor 58 may include one or more hydrophones, geophones, particle displacement sensors, particle velocity sensors, accelerometers, pressure gradient sensors, or combinations thereof.

For example, in accordance with some embodiments of the invention, a particular multi-component seismic sensor 58 may include a hydrophone 55 for measuring pressure and three orthogonally-aligned accelerometers 50 to measure three corresponding orthogonal components of particle velocity and/or acceleration near the seismic sensor 58. It is noted that the multi-component seismic sensor 58 may be implemented as a single device (as depicted in Fig. 1) or may be implemented as a plurality of devices, depending on the particular embodiment of the invention. A particular multi-component seismic sensor 58 may also include one or more pressure gradient sensors 56, another type of particle motion sensor. The pressure gradient sensor measures the change in the pressure wavefield at a particular point with respect to a particular direction. For example, one of the pressure gradient sensors 56 may acquire seismic data indicative of, at a particular point, the partial derivative of the pressure wavefield with respect to the crossline direction, and another one of the pressure gradient sensors may acquire, a particular point, seismic data indicative of the pressure data with respect to the inline direction.

The marine seismic data acquisition system 10 includes one or more seismic sources 40 (one exemplary source 40 being depicted in Fig. 1), such as air guns and the like. In some embodiments of the invention, the seismic sources 40 may be coupled to, or towed by, the survey vessel 20. Alternatively, in other embodiments of the invention, the seismic sources 40 may operate independently of the survey vessel 20, in that the sources 40 may be coupled to other vessels or buoys, as just a few examples.

As the seismic streamers 30 are towed behind the survey vessel 20, acoustic signals 42 (an exemplary acoustic signal 42 being depicted in Fig. 1), often referred to as "shots," are produced by the seismic sources 40 and are directed down through a water column 44 into strata 62 and 68 beneath a water bottom surface 24. The acoustic signals 42 are reflected from the various subterranean geological formations, such as an exemplary formation 65 that is depicted in Fig. 1.

The incident acoustic signals 42 that are acquired by the sources 40 produce corresponding reflected acoustic signals, or pressure waves 60, which are sensed by the multi-component seismic sensors 58. It is noted that the pressure waves that are received and sensed by the multi-component seismic sensors 58 include "up going" pressure waves that propagate to the sensors 58 without reflection, as well as "down going" pressure waves that are produced by reflections of the pressure waves 60 from an air-water boundary 31.

The multi-component seismic sensors 58 generate signals (digital signals, for example), called "traces," which indicate the acquired measurements of the pressure wavefield and particle motion. The traces are recorded and may be at least partially processed by a signal processing unit 23 that is deployed on the survey vessel 20, in accordance with some embodiments of the invention. For example, a particular multi-component seismic sensor 58 may provide a trace, which corresponds to a measure of a pressure wavefield by its hydrophone 55; and the sensor 58 may provide one or more traces that correspond to one or more components of particle motion, which are measured by its accelerometers 50.

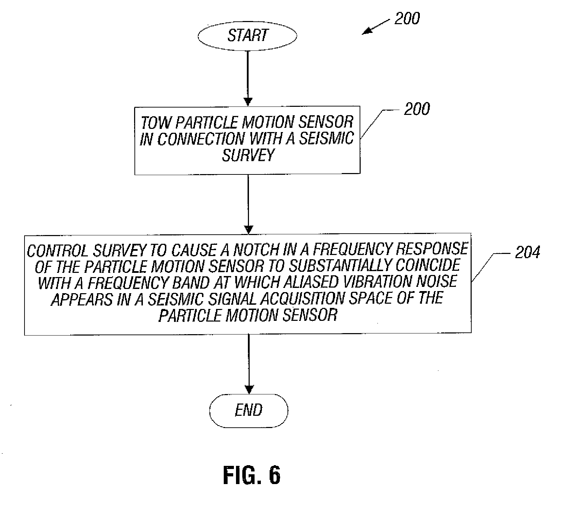

The goal of the seismic acquisition is to build up an image of a survey area for purposes of identifying subterranean geological formations, such as the exemplary geological formation 65. Subsequent analysis of the representation may reveal probable locations of hydrocarbon deposits in subterranean geological formations. Depending on the particular embodiment of the invention, portions of the analysis of the representation may be performed on the seismic survey vessel 20, such as by the signal processing unit 23. In accordance with other embodiments of the invention, the representation may be processed by a seismic data processing system (such as an exemplary seismic data processing system 320 that is depicted in Fig. 6 and is further described below) that may be, for example, located on land or on the vessel 20. Thus, many variations are possible and are within the scope of the appended claims.

The down going pressure waves create an interference known as "ghost" in the art. The technique of decomposing the recorded wavefield into up and down going components is often referred to as wavefield separation, or "deghosting." The particle motion data that is provided by the multi-component seismic sensors 58 allows the recovery of "ghost" free data, which means data that is indicative of the upgoing wavefield.

Particle motion sensors, such as the above-described accelerometers and pressure gradient sensors, may be quite sensitive to vibration noise. If appropriate measures are not taken, the measurements that are acquired by the particle motion sensors may therefore contain vibration noise, which may be difficult to separate from the acquired seismic signal.

The vibration noise has a relatively slow apparent velocity along the streamer cable, such as a velocity of 30 meters per second (m/s), as an example; and if appropriate measures are not taken, the vibration noise may be aliased into the frequency-wavenumber (f-k) space (called the "signal cone") in which the particle motion sensor acquires the seismic signal.

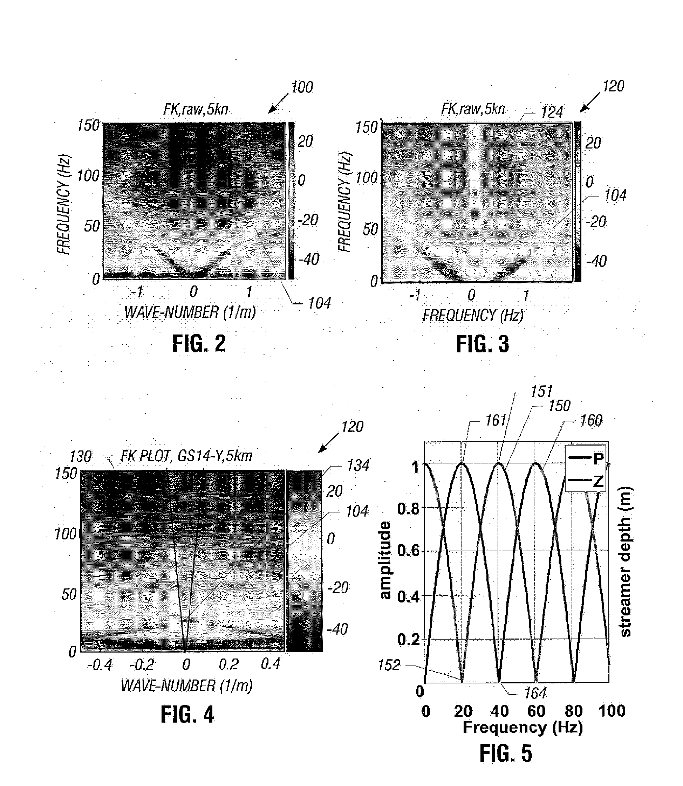

As a more specific example, Fig. 2 depicts an illustration 100 in frequency-wavenumber (f-k) space of vibration noise 104 that may be present at a particular sensor location during a seismic survey. Fig. 3 is an illustration 120 in f-k space of the vibration noise and signal content 124 that appears at the sensor location.

Referring to Fig. 4 (which depicts an expanded section from Fig. 3 of the f-k space near wavenumber zero), the signal content from the particle motion sensor is acquired in the sensor's signal cone 130. Due to aliasing of the vibration noise, the signal cone 130 may also undesirably include vibration noise, as indicated at reference numeral 134. Thus, it will be difficult to fully separate the vibration noise from the acquired seismic signal. By digital filtering of every recorded particle motion sensor, or by hardwiring the particle motion sensors, the vibration noise 104 can be attenuated for high wave numbers (outside the signal cone 130), but not for apparent wave number of the vibration noise close to k=0 (at 134).

Because the vibration noise has a relatively slow apparent velocity along the streamer cable, one conventional technique to avoid aliased vibration noise is to densely space the particle motion sensors along the cable. Due to the dense sampling, there is no vibration noise in the signal cone, as there is no aliasing. To remove vibration noise having a high wave number, every particle motion sensor may be recorded and filtered digitally or the particle motion sensors may be hardwired in arrays. However, the dense sampling approach typically is technically difficult and may be associated with significant costs.

As illustrated in Fig. 4, the aliased vibration noise 134 is in a relatively narrow frequency band in the f-k domain. In a relatively sparsely sampled data set with aliased vibration noise, the signal content is contaminated at the frequency where the vibration noise aliases back into the signal cone 130 but is not contaminated at higher frequencies, up to the next frequency with aliased vibration noise around k=0 (which will be the double of the first frequency if the vibration noise velocity is constant with frequency).

In accordance with embodiments of the invention described herein, the above-described characteristic of the aliased vibration noise is taken into account by using the particle motion data that are acquired at frequencies between the bands in which aliased vibration noise appears in the signal cone 130 and using the acquired pressure data to fill in the gaps. More specifically, as set forth below, the seismic survey is controlled to cause notches in the frequency response of the particle motion sensor to substantially coincide with the frequency bands at which the aliased vibration noise appears in the signal cone 130 of the particle motion sensor. The notches, which cause corresponding gaps in the particle motion data, are already taken into account, as the particle motion data (hereinafter called the "Z data") and the pressure data (hereinafter called the "P data") are combined to generate a full bandwidth set of seismic data due. The notches in the frequency spectrum of the particle motion data Z and similar notches in the frequency spectrum of the pressure data P are attributable to interference between the upgoing and downgoing pressure waves, which form complimentary notches and peaks in the P and Z spectra.

More particularly, referring to Fig. 5, a plot 160 of the amplitude versus pressure P data and a plot 150 of the amplitude versus frequency of the particle motion Z data show the complimentary arrangement. As a more specific example, a peak 151 of the particle motion data Z plot 150 occurs at a notch 164 of the pressure data P plot 160. Similarly, a peak 161 of the pressure data P plot 160 occurs at a notch 152 of the particle motion data Z plot 150.

The specific frequencies and wave numbers of the notches and peaks are a function of the towing depth of the streamer and the spacing of the particle motion sensors along the streamer. In accordance with embodiments of the invention described herein, one or more aspects of the survey, such as the towing depth and particle motion sensor spacing, are controlled for purposes of causing aliased vibration noise content to appear in frequency bands that correspond to notches in the frequency responses of the particle motion sensors. Thus, near these notch frequencies, there is relatively little signal content acquired by the particle motion sensors, and the output of the pressure-particle motion data combination at this frequency relies on the pressure P data. Therefore, having a high noise level on the particle motion sensor outputs around this frequency is acceptable and does not impact the quality of the output of the P-Z combination.

Referring to Fig. 6, to summarize, a technique 200 in accordance with the invention includes towing (block 202) a particle motion sensor in connection with a seismic survey. The survey is controlled (block 204) to cause a notch in a frequency response of the particle motion sensor to substantially coincide with a frequency band at which aliased vibration noise appears in a seismic signal acquisition space (i.e., the signal cone) of the particle motion sensor.

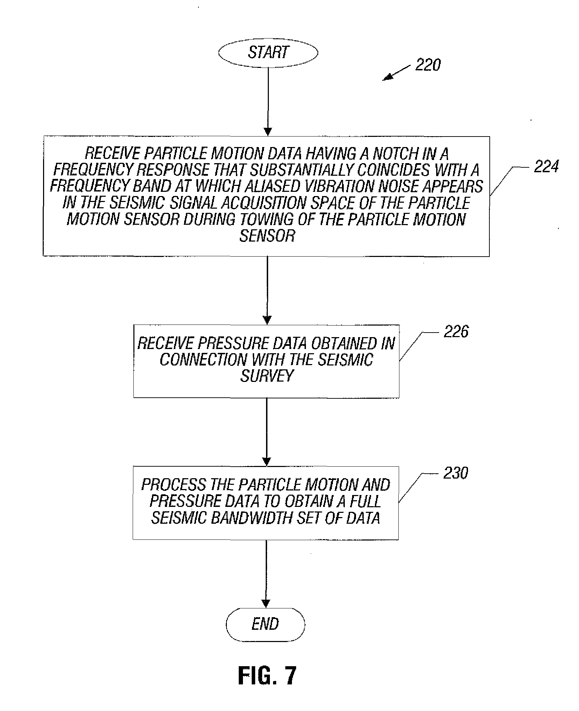

Referring to Fig. 7, the processing of the survey data includes, pursuant to technique 220, receiving (block 224) particle motion data that were obtained while in tow such that a notch in a frequency response of the particle motion sensor substantially coincides with a frequency band in which aliased vibration noise appears in a seismic signal acquisition space of the particle motion sensor. The technique 220 includes receiving pressure data (block 226) in connection with the seismic survey and processing (block 230) the particle motion and pressure data to obtain a full seismic bandwidth set of data.

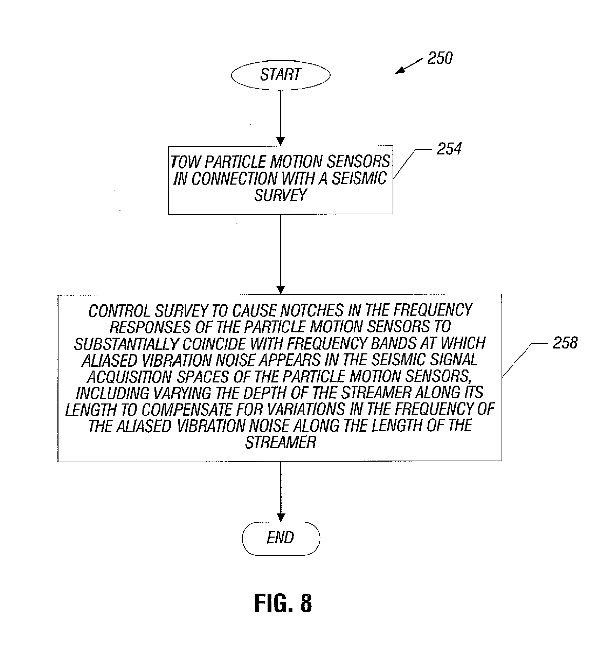

Vibration velocity may not be constant along the length of the streamer because of the variation in tension along the streamer. Furthermore, the vibration velocity may change with time in one position (may change due to a change in the towing speed, for example). As a result, the location of the frequency band at which vibration noise is aliased into the signal cone may temporally and spatially vary. To account for the varying vibration noise, several different compensation techniques may be used. For example, referring to Fig. 8, in accordance with some embodiments of the invention, the depth of the streamer may be varied along its length during the seismic survey for purposes of compensating for the variation of the vibration velocity along the length of the streamer.

Because the streamer cable has a higher tension at its front (i.e., the end of the streamer closest to the survey vessel), the vibration noise near the front of the streamer is faster, and thus, the aliasing occurs at a higher frequency for a given spacing. At the tail of the streamer, the noise aliasing occurs at a lower frequency. Therefore, by towing the streamer deeper at the tail than in the front, the towing depth notch of the particle motion data Z and the vibration aliasing frequency are matched along the length of the streamer. The variation in the depth of the streamer may be achieved with the use of depth controllers on the streamer.

Thus, referring to Fig. 8, in accordance with some embodiments of the invention, a technique 250 includes towing (block 254) particle motion sensors in connection with a seismic survey. The technique 250 includes controlling (block 258) the survey to cause notches in the frequency responses of the particle motion sensors to substantially coincide with frequency bands at which aliased vibration noise appears in the seismic signal acquisition space of each of the particle motion sensors. The control includes varying the depth of the streamer along its length to compensate for the variation in the vibration velocity (and thus, the variation in the frequency of the aliased vibration noise) along the length of the streamer.

As a more specific example, for a vibration velocity of 60 meters per second (m/s) and a main particle motion sensor spacing of 1.6 meters (m), the frequency at which the vibration noise aliases back into the signal cone is 37.5 Hertz (Hz). To form a corresponding notch in the frequency spectrum of the particle motion sensor signal, the front of the streamer is towed at a depth of 10 m. At the tail of the streamer, the vibration velocity is 30 m/s, and the corresponding frequency notch is 18.75 Hz for the same particle motion sensor spacing. Based on these parameters, the tail of the streamer is towed at a depth of 20 m. Between the front and tail of the streamer, the streamer depth is gradually varied from 10 to 20 m, following the tension in the streamer cable, which decreases roughly linearly.

Another technique to compensate for the tension differences in the streamer cable is to vary the main sensor spacing along the length of the streamer. In this regard, for a given streamer depth, the notch frequency on the particle motion component is constant along the streamer. The vibration aliasing frequency ("f') along the same streamer is equal to f=c/d, where "d" is the sensor spacing, and "c" is the vibration propagation velocity. The vibration propagation velocity c is higher at the front of the streamer where there is more tension, and the vibration propagation velocity c decreases along the length of the streamer from the front to the tail. To keep the vibration aliasing frequency f constant, the main sensor spacing d is decreased along the streamer. In other words, the spacing of the particle motion sensors is the largest at the front of the streamer, is the smallest at the tail of the streamer, and progressively decreases from the front to the tail.

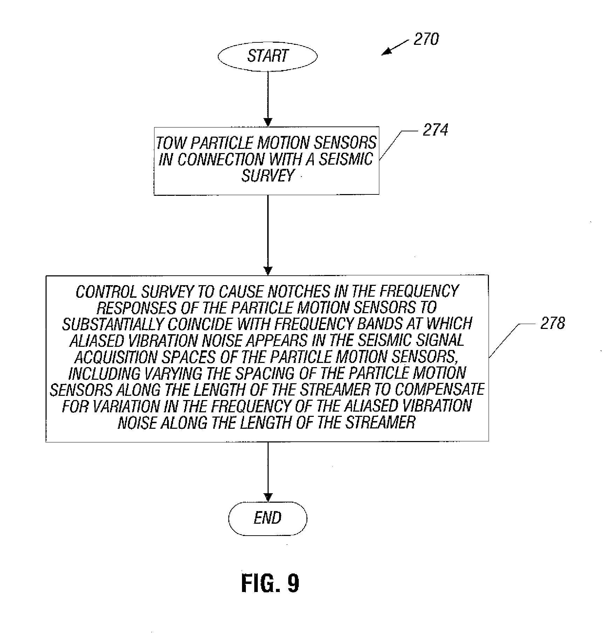

Thus, referring to Fig. 9, in accordance with the invention, a technique 270 includes towing (block 274) particle motion sensors in connection with a seismic survey. The technique 270 includes controlling (block 278) the survey to cause notches in the frequency responses of the particle motion sensors to substantially coincide with the frequency bands at which aliased vibration noise appears in the seismic signal acquisition spaces of the particle motion sensors. This control includes varying the spacing of the particle motion sensors along the length of the streamer to compensate for the variation in vibration velocity along the length of the streamer.

As a more specific example, the frequency notch in the particle motion data Z is 25 Hz if it is assumed that the front vibration velocity is 60 m/s and the depth is 15 m. At the front of the streamer, the spacing is set to 2.4 m to cause the vibration noise aliasing in the signal cone to be at 25 Hz. At the tail of the streamer, at the same depth, the vibration noise 40 m/s. Therefore, at the tail of the streamer, the spacing is 1.6 m. Between the front end and tail of the streamer, the spacing is varied from 2.4 to 1.6 m.

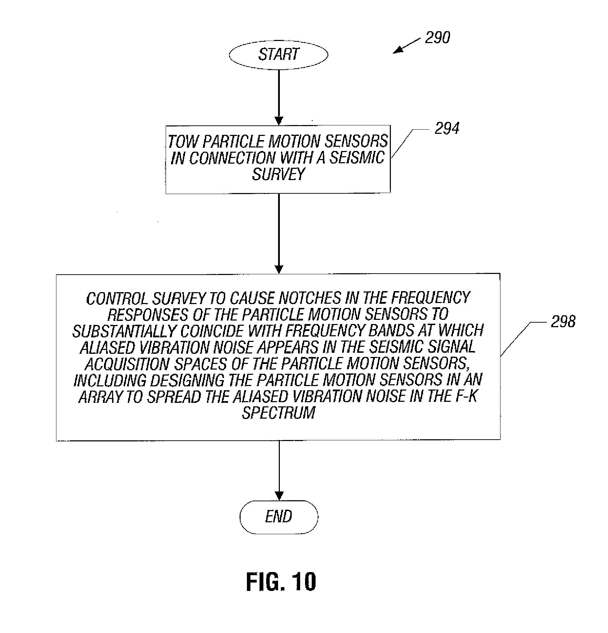

A technique that may be used to compensate for temporal or spatial differences in the aliased vibration velocity is to design the particle motion sensor array to compensate for the variation range. In this regard, an array of the particle motion sensors may be designed on the streamer to spread, or "smear" the vibration noise in f-k space. Thus, referring to Fig. 10, a technique 290 in accordance with the invention includes towing (block 294) particle motion sensors in connection with a seismic survey. The technique 290 includes controlling (block 298) the survey to cause notches in the frequency responses of the particle motion sensors to substantially coincide with frequency bands at which aliased vibration noise appears in the seismic signal acquisition spaces of the particle motion sensors. The control includes designing the particle motion sensors in an array to spread the aliased vibration noise in the f-k spectrum.

The techniques 250, 270 and 290 are examples of techniques that may be used to account for the spatial and temporal changes in the frequency of the aliased vibration noise. One or more of the techniques 250, 270 and 290 may be combined, depending on the particular embodiment of the invention.

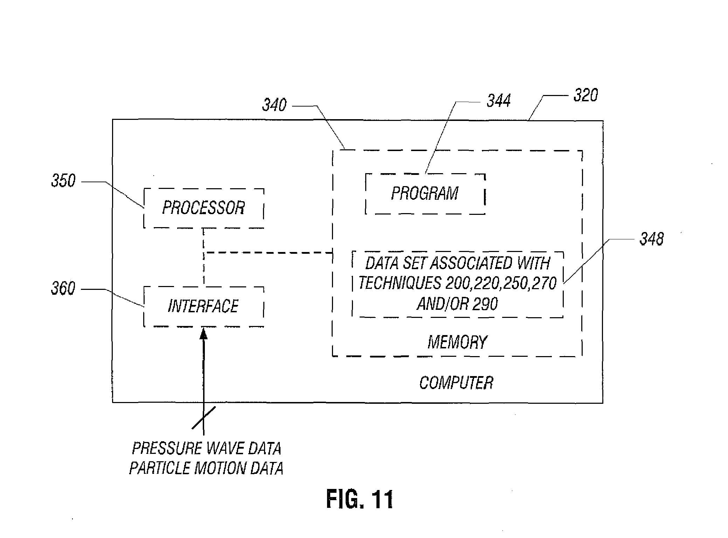

Referring to Fig. 11, in accordance with some embodiments of the invention, a seismic data processing system 320 may perform at least part of the techniques that are disclosed herein for purposes of compensating for aliased vibration noise. In accordance with some embodiments of the invention, the system 320 may include a processor 350, such as one or more microprocessors and/or microcontrollers. The processor 350 may be located on a streamer 30 (Fig. 1), located on the vessel 20 or located at a land-based processing facility (as examples), depending on the particular embodiment of the invention.

The processor 350 may be coupled to a communication interface 360 for purposes of receiving seismic data that corresponds to pressure and particle motion measurements. Thus, in accordance with embodiments of the invention described herein, the processor 350, when executing instructions stored in a memory of the seismic data processing system 320, may receive multi-component data that are acquired by multi-component seismic sensors while in tow and may combine the pressure and particle motion data to accommodate frequency notches to derive a full bandwidth seismic data set. It is noted that, depending on the particular embodiment of the invention, the multi-component data may be data that is directly received from the multi-component seismic sensor as the data is being acquired (for the case in which the processor 350 is part of the survey system, such as part of the vessel or streamer) or may be multi-component data that was previously acquired by the seismic sensors while in tow and stored and communicated to the processor 350, which may be in a land-based facility, for example.

As examples, the interface 360 may be a USB serial bus interface, a network interface, a removable media (such as a flash card, CD-ROM, etc.) interface or a magnetic storage interface (IDE or SCSI interfaces, as examples). Thus, the interface 360 may take on numerous forms, depending on the particular embodiment of the invention.

In accordance with some embodiments of the invention, the interface 360 may be coupled to a memory 340 of the seismic data processing system 320 and may store, for example, various data sets involved with the techniques 200, 220, 250, 270 and/or 290, as indicated by reference numeral 348. The memory 340 may store program instructions 344, which when executed by the processor 350, may cause the processor 350 to perform one or more of the techniques that are disclosed herein, such as the techniques 200, 220, 250, 270 and/or 290 (as an example), as indicated by reference numeral 348 and display results obtained via the technique(s) on a display (not shown in Fig. 11) of the system 320, in accordance with some embodiments of the invention.

While the present invention has been described with respect to a limited number of embodiments, those skilled in the art, having the benefit of this disclosure, will appreciate numerous modifications and variations therefrom. It is intended that the appended claims cover all such modifications and variations as fall within the true spirit and scope of this present invention.

## Claims

1. A method geophysical exploration comprising:
towing a particle motion sensor in connection with a seismic survey; and
controlling the survey to cause a notch in a frequency response of the particle motion sensor to substantially coincide with a frequency band at which aliased vibration noise appears in a seismic signal acquisition space of the particle motion sensor.

2. The method of claim 1, wherein
the notch varies with a towing depth of the particle motion sensor, and
the act of controlling the survey comprises regulating the towing depth based on a depth at which the notch substantially coincides with the frequency at which aliased vibration noise appears in the seismic signal acquisition space of the particle motion sensor.

3. The method of claim 1, wherein the particle motion sensor is part of a set of particle motion sensors located on a streamer, each of the set of particle motion sensors having an associated notch in a frequency response, the method further comprising:
varying a depth of the streamer along the length of the streamer to cause the associated notches to coincide with frequencies at which aliased vibration noise appears in seismic signal acquisition spaces of the particle motion sensors.

4. The method of claim 1, wherein
the notch varies with a particle motion sensor spacing of a streamer on which the particle motion sensor is located, and
the act of controlling the survey comprises selecting the spacing based on a spacing at which the notch substantially coincides with the frequency at with aliased vibration noise appears in the seismic signal acquisition space of the particle motion sensor.

5. The method of claim 1, wherein the particle motion sensor is part of a set of particle motion sensors located on a streamer and associated with a sensor spacing, and each of the set of particle motion sensors having an associated notch in a frequency response, the method further comprising:
varying the spacing along the length of the streamer to cause the associated notches to coincide with frequencies at which aliased vibration noise appears in seismic signal acquisition spaces of the particle motion sensors.

6. The method of claim 1, wherein the particle motion sensor is part of a set of particle motion sensors located on a streamer, each of the set of particle motion sensors having an associated notch in a frequency response, the method further comprising
configuring the set of particle motion sensors in an array to spread out frequency bands at which aliased vibration noise appears in seismic signal acquisition spaces of the particle motion sensors.

7. The method of claim 1, wherein the seismic signal acquisition space comprises a region of frequency-wavenumber space associated with seismic signal content acquired by the particle motion sensor.

8. A method of geophysical exploration comprising:
obtaining a first set of seismic data acquired by a particle motion sensor towed in connection with a seismic survey, the particle motion sensor having a frequency response including a notch that substantially coincides with a frequency band at which aliased vibration noise appears in a seismic signal acquisition space of the particle motion sensor;
obtaining pressure data acquired by a pressure sensor while in tow in connection with the seismic survey; and
processing the first and second sets of seismic data.

9. The method of claim 8, wherein the notch varies with a towing depth of the particle motion sensor.

10. The method of claim 8, wherein the notch varies with a particle motion sensor spacing along a streamer on which the particle motion sensor is located.

11. The method of claim 8, wherein the processing comprises processing the first and second sets of seismic data to generate seismic data content over a frequency bandwidth that spans the notch.

12. The method of claim 8, wherein the particle motion sensor comprises one a plurality of particle motion sensors, and each of the plurality of particle motion sensors having notches that substantially coincide with frequency bands at which aliased vibration noise signal appears in a seismic signal acquisition space of the particle motion sensor.

13. The method of claim 8, wherein the notch is one of a plurality of notches in the frequency response of the particle motion sensor, and each of the plurality of notches substantially coincides with a frequency band at which aliased vibration noise appears in the seismic signal acquisition space of the particle motion sensor.

14. A system for geophysical exploration comprising:
an interface to receive a first set of seismic data acquired by a particle motion sensor while in tow in connection with a seismic survey and a second set of seismic data acquired by a pressure sensor while in tow in connection with the seismic survey, the first set of seismic data being associated with a frequency response comprising a notch that substantially coincides with a frequency band at which aliased vibration noise appears in a seismic signal acquisition space of the particle motion sensor; and
a processor to process the first and second sets of seismic data using a method as defined in any one of claims 1-13.

15. A computer-accessible storage medium that stores instructions that, when executed by a processor-based system, cause the processor-based system to receive a first set of seismic data acquired by a particle motion sensor while in tow in connection with a seismic survey and a second set of seismic data acquired by a pressure sensor while in tow in connection with the seismic survey, the first set of seismic data being associated with a frequency response comprising a notch that substantially co-incides with a frequency band at which aliased vibration noise appears in a seismic acquisition signal space of the particle motion sensor; and to process the first and second sets of seismic data.
